# EUROPEAN PATENT SPECIFICATION

(11) **EP 4 076 108 B1**
(45) Date of publication and mention of the grant of the patent: **26.07.2023**
(21) Application number: 20821263.9
(22) Date of filing: 15.12.2020
(51) Int. Cl.: A47J 31/44

(54) **A MIXING APPARATUS**
MISCHVORRICHTUNG
APPAREIL DE MÉLANGE

(30) Priority: 19.12.2019 EP 19217889
(43) Date of publication of application: 26.10.2022
(73) Proprietor: Koninklijke Philips N.V., 5656 AG Eindhoven (NL)
(72) Inventor: LOUWSMA, Hendrik, Klaas, 5656 AE Eindhoven (NL); ZWART, Bart-Jan, 5656 AE Eindhoven (NL); BAKKER-VAN DER KAMP, Gertrude, Riëtte, 5656 AE Eindhoven (NL); NOORDHUIS, Joeke, 5656 AE Eindhoven (NL); TIBBE, Tim, Gerard, 5656 AE Eindhoven (NL)
(74) Representative: Vollering, Stefanus Franciscus Maria
(86) International application number: PCT/EP2020/086076
(87) International publication number: WO 2021/122505

(56) References cited:
- EP-A1- 2 497 397
- WO-A1-2005/063093
- WO-A1-2012/113457
- WO-A1-2019/129515
- WO-A1-2019/129599

## Description

### FIELD OF THE INVENTION

This invention relates to the field of beverage preparation, and more specifically to the field of frothed milk beverage preparation.

### BACKGROUND OF THE INVENTION

Typically, espresso appliances provide the function of cappuccino brewing. In most cases, steam is used for heating and frothing the milk, in a similar manner to a barista. To improve the ease of use of the appliance and provide stable performance to all users regardless of skill, several milk frothing modules have been developed. Normally, these modules are removable from the base appliance, as all parts in contact with milk need to be cleaned.

The applicant has developed a milk frothing system which comprises only two separable components, which makes it easily cleanable for the user. This design is disclosed in WO 2019/129599 and WO 2019/1029515.

The ratio of foam to milk, and hence the amount and/or consistency of the foam, is fixed in conventional milk frothing modules. The user can switch off (stop) the frothing process before the end, but this does not change the ratio of foam to milk.

It would be desirable for a user to be able to select a preferred milk to foam ratio, so as to be able to adjust the foam quantity and/or quality. However, there is no simple and low cost solution to enable such a foam selection to be made.

### SUMMARY OF THE INVENTION

The invention is defined by the claims.

According to examples in accordance with an aspect of the invention, there is provided a mixing apparatus comprising:
a first port for receiving milk;
a second port for receiving steam;
a mixing chamber for mixing milk, steam and air; and
a channel arrangement between the first and second ports and the mixing chamber, wherein the channel arrangement comprises:
   a first channel portion connected between the first port and a frothing section;
   a second channel portion connected between the second port and the frothing section; and
   an air intake channel to the frothing section; and
a seal forming a surface of the first and second channel portions and the air intake channel,
wherein the frothing section couples to the mixing chamber and wherein the mixing apparatus further comprises an adjustment element for adjusting the seal in the vicinity of the air intake channel, thereby to adjust a frothing level.

This mixing apparatus has a channel arrangement which brings together milk, steam and air to create heated and frothed milk. The frothing is created by the air introduced via the air intake channel.

A seal closes the channel arrangement and thereby forms one surface of the air intake channel. By providing an adjustment element for adjusting the seal at or in the vicinity of the air intake channel, the resistance to the air flow is controlled and in this way the level of frothing may be adjusted.

The mixing apparatus may comprise:
a first container, wherein the first container comprises the channel arrangement; and
a second container, wherein the second container is adapted to receive the first container,
wherein the seal is disposed between the first container and the second container.

This configuration allows for milk and steam to be provided to the mixing chamber by way of a channel defined at least in part by a seal. In this way, the channel may be disassembled for cleaning by simply removing the first container from the second container as the channel arrangement only comprises these two separable parts.

In addition, as the channel is itself defined in part by the seal when disposed between the first and second containers, the adequate sealing of the channel is ensured. Mounting of the two containers together provides the required seal positioning and/or compression or extension.

The first container may further comprise a raised channel portion, and wherein the channel arrangement is defined between the raised channel portion and the seal.

In this way, the dimensions of the channel may be controlled by altering the depth of the raised channel portion and the cleaning required for the seal is reduced.

The adjustment element for example comprises a pusher for pushing the seal into the air intake channel.

This provides a restriction to the air intake channel, and thereby alters the air flow and hence the level of frothing.

The mixing apparatus may comprise an outlet nozzle from which frothed milk is to be dispensed from the mixing chamber, wherein the adjustment element comprises an adjustment ring around the outlet nozzle, wherein the adjustment ring actuates the pusher, and wherein the adjustment ring is rotatable to adjust the advance of the pusher towards the air intake channel.

This provides a simple user interface for setting the frothing level, by simply selecting the angular position of the adjustment ring around the outlet nozzle.

The adjustment ring for example comprises a cam surface for actuating the pusher. Thus, the ring simply rotates and the rotation is converted to a linear pushing by the cam surface.

The adjustment element for example has at least three settings, comprising:
a maximum froth setting;
an intermediate froth setting; and
a no froth setting.

The froth setting may be continuously adjustable between the maximum and no froth settings, or there may be one or more discrete intermediate settings.

The seal for example comprises a span seal. A span seal is a seal which is extended across and beyond an opening and thus acts down over the opening in the manner of a closing lid. Thus it spans the full area of the opening to be sealed rather than forming a seal around a separate closure part. The term "span seal" is used to denote this general type of sealing configuration.

The span seal operates using pull forces, which stretch the seal rather than compress it. This results in a slow rising indentation force, which means tolerances are easier to overcome without adding a lot of useless force. The span seal provides sealing direct to the channel arrangement without a large amount of deformation making the geometry of the channel arrangement easier to control.

The invention also provides a coffee maker, the coffee maker comprising;
a liquid coffee extraction apparatus;
the mixing apparatus as defined above; and
a dispenser adapted to dispense:
   liquid coffee from the liquid coffee extraction apparatus; and
   frothed milk from the mixing apparatus.

### BRIEF DESCRIPTION OF THE DRAWINGS

Examples of the invention will now be described in detail with reference to the accompanying drawings, in which:
Fig. 1 shows a two-part mixing apparatus;
Fig. 2A shows an exploded view in more detail of the mixing apparatus of Fig. 1;
Fig. 2B shows an assembled view of the mixing apparatus of Fig. 2A;
Fig. 3A shows a detailed view of the channel of the mixing apparatus of Fig. 2A;
Fig. 3B shows the flow of fluid through the channel of Fig. 3A;
Fig. 4A shows an example of a span seal;
Fig. 4B illustrates the operation of the span seal of Fig. 4A;
Fig. 5A shows an alternative channel of a mixing apparatus;
Fig. 5B shows a cross section of the channel of Fig. 5A;
Fig. 6 shows an example transition portion of a seal;
Fig. 7 shows the top part of the channel arrangement to define a cross section X-X;
Fig. 8 shows the cross section X-X identified in Fig. 7 for a known design of Figs. 1 to 6;
Figs. 9A to 9C show a generic adjustment element which pushes down on the seal, and show different degrees of pushing the seal into the air intake channel;
Fig. 10 shows how the approach of Figs. 9A to 9C may be applied to the mixing apparatus described above, as a modification to Fig. 8;
Fig. 11 shows a side view of the mixing apparatus showing an adjustment ring around the outlet nozzle; and
Figs. 12A to 12C show the arrangement of Fig. 10 in three different froth settings.

### DETAILED DESCRIPTION OF THE EMBODIMENTS

The invention provides a mixing apparatus having a first port for receiving milk, a second port for receiving steam and a mixing chamber for mixing milk, steam and air. A channel arrangement connects the ports as well as defines an air intake channel which leads to a frothing section. An adjustment element is provided for adjusting a seal in the vicinity of the air intake channel, thereby to adjust a frothing level.

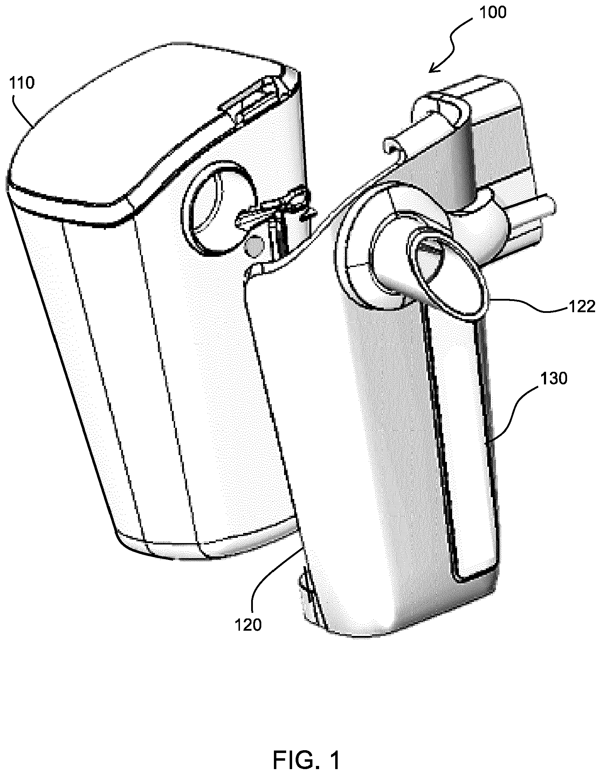

Fig. 1 shows the mixing apparatus 100 comprising a first container 110 and a second container 120, adapted to receive the first container 110. The second container may surround the first container, or it may only partially surround the first container, as shown. The second container 120 defines an outlet nozzle 122 from which frothed milk is provided. The first container may thus fit fully into the second container or else the second container may clip onto the outside of the first container.

A channel arrangement is formed at the interface between the first and second containers, as discussed in more detail below. A seal 130 provides sealing of the channel arrangement. When the first and second containers are separated, the channel arrangement is opened. In the illustrated embodiment, the seal 130 is visible on the outside of the second container 120 because it extends fully through the wall of the second container in this example. There is no purpose to the visible outer surface of the seal; rather it is just one aesthetic design option. The inner surface of the seal closes the channel portions of the channel arrangement.

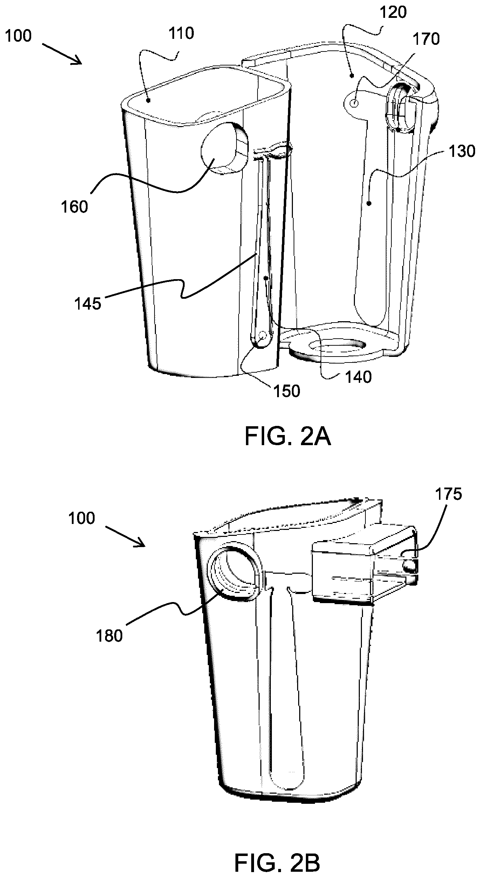

Fig. 2A shows the mixing apparatus 100 in more detail and shows the first container 110, the second container 120, adapted to receive the first container and the seal 130 disposed between the first and second containers.

Instead of being integrated with the container and extending fully through the container wall, the seal may be a press fit into a side wall of one of the two containers so that when the two containers are assembled, the seal is sandwiched between them. In all designs, the mating between the seal and the channel arrangement in one of the containers forms a closed channel which defines the fluid paths between a milk inlet, a steam inlet and a frothed milk outlet of the mixing apparatus 100. By separating the two containers all parts can be easily cleaned. Preferably, there is only one seal element for sealing the entire channel arrangement used for the supply and mixing of milk and steam.

The seal may be 2 shot (2K) molded into the second container 120, or else it may be a separate seal which is removable from a recess in the second container.

The channel arrangement 140 may be provided in the first container 110, and together with the seal 130 define a closed channel when the mixing apparatus is assembled. In the example shown in Fig. 1, the first container 110 comprises a raised channel portion 145, which further defines the channel arrangement 140. The channel arrangement 140 connects a first port 150 near a bottom of the first container and a mixing chamber 160 near a top of the first container. The second container comprises a steam entry port (indicated with reference numeral 175 in Fig. 2B) which is connected to a second port 170 provided in the seal 130. The channel arrangement 140 further connects the second port 170 to the first port 150 and the mixing chamber.

Fig. 2B shows the mixing apparatus 100 of Fig. 1A in an assembled state.

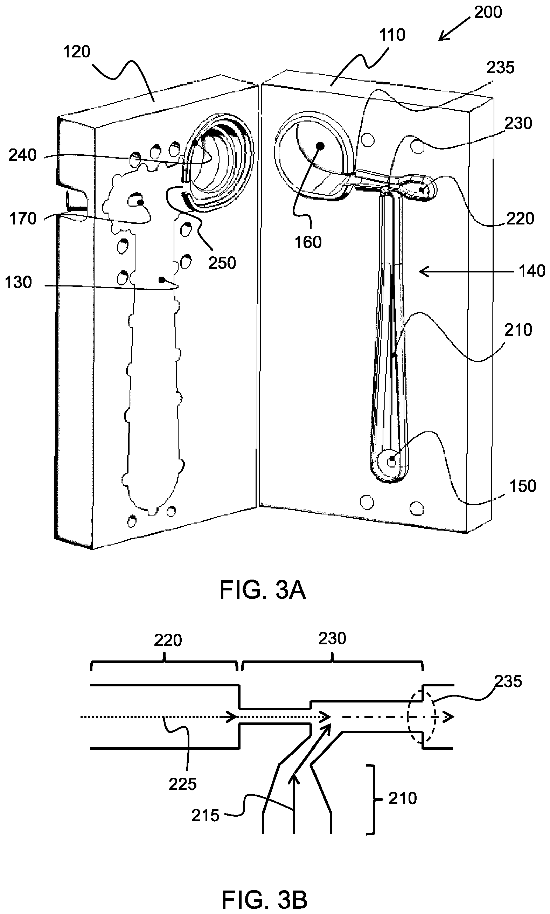

In this Fig., it can be clearly seen that the second container 120 comprises a steam entry port 175 from which steam may be provided to the second port 170. The second container 120 further comprises a third port 180 that in assembled condition is connected to the mixing chamber 160 of the first container, thereby allowing the contents of the mixing chamber to be easily obtained from the mixing apparatus. The third port 180 leads to the outlet nozzle 122 (not shown in Fig. 2A or 2B but seen in Fig. 1). The operation of the mixing apparatus is described with reference to Fig. 3A below.

Fig. 3A shows a detailed view 200 of the channel arrangement 140 of the mixing apparatus of Fig. 2A. Fig. 3B shows a simple illustration of the intersection of the various portions of the channel arrangement 140.

The channel arrangement 140 may be divided into several portions according to the operation performed by each portion. In operation, milk may be provided to the first container 110 and steam may be provided to the steam entry port 175 of the second container. As steam enters the channel arrangement 140 by way of the second port 170, milk 215 is drawn from the first container 110 into a first channel portion 210 by way of the first port 150. The steam 225 enters a second channel portion 220 and travels through a third channel portion 230 (hereinafter also referred to as frothing section) and into the mixing chamber 160. The flow of steam generates a reduced pressure (compared to the ambient pressure) in the third channel portion 230, thereby drawing in the milk 215 along the first channel portion 210. The steam is further used to heat the milk and mix the milk with air and thus forms the driving force of the overall frothing system.

The milk 215 is drawn along the first channel portion 210 until it meets the flow of steam 225 at the intersection of channel portions 210 and 230. This intersection may be at a central part of the third channel portion 230, just downstream of a throat formed between the second channel portion 220 and the third channel portion 230. At this throat, the steam is accelerated substantially, thereby imparting a Venturi effect (a reduction in fluid pressure that results from the constriction of the throat) on the steam as it passes into the third channel portion 230.

The static absolute steam pressure (which in the given example may for instance be approximately 1.9 bar = 190kPa) is thereby transferred into a dynamic pressure (velocity). The milk is sucked in by the resulting pressure reduction. The steam velocity is highest at the end of the throat, i.e. where the first channel portion 210 intersects the third channel portion 230. The second part of the third channel portion 230, i.e. the portion downstream of the throat and aforementioned intersection may be considered to function as a diffuser, in which the velocity of the milk and steam mixture slows down, transferring dynamic pressure back into static pressure.

The third channel portion 230 terminates at an end 235 which opens into the mixing chamber 160. An air intake channel 725 is formed at the end 235, just upstream of the mixing chamber, via which air is introduced in the milk/steam mixture. The flow speed of the milk /steam mixture near the air intake channel is such that the static pressure is still below ambient pressure, so that air is drawn in and leakage of milk/steam mixture is prevented. The introduced air provides bubbles for the desired frothing. In the mixing chamber 160, the mixture of milk, steam and air reaches ambient static pressure and the velocity component or dynamic pressure returns to zero.

Thus, the steam experiences a Venturi effect in the throat. This is the master (active) effect, driving the milk flow as a slave (passive) effect. This Venturi effect in the third channel portion 230 may be achieved by simply restricting the cross sectional area of the third channel portion 230 relative to the second channel portion 220. The flow of the milk and steam in the third channel portion, in combination with the drawing in of air, defines the frothing performance of the mixing apparatus, and the pressure differentials prevent the milk and steam from flowing down the incorrect channels.

The first channel portion 210 may typically be vertical in use and extend up from the (milk entry) first port 150. At the top it may meet the second channel portion 220 to one side which has the steam entry port 175 at its remote end, and the third channel portion 230 to the other side, which has the mixing chamber 160 at its remote end. In the illustrated embodiment, the channel arrangement 140 thus has a T-shape, and the seal 130 has a corresponding T-shape.

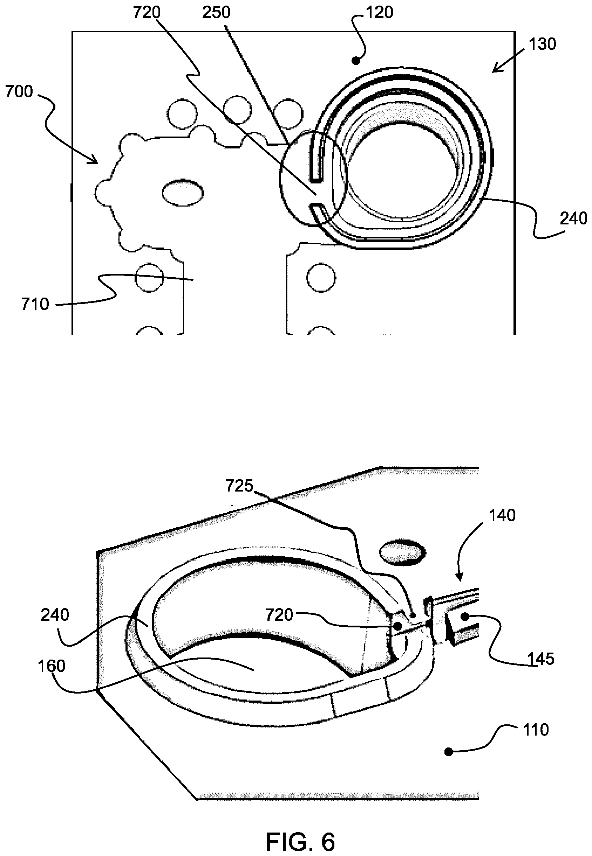

The seal 130 may be an integral part of the second container. It may alternatively be a removable seal, in which case it may be a press fit into a side wall of the second container 120. In some instances, the seal 130 may comprise a first sealing member 240 and a transition portion 250. This will be described in more detail with reference to Fig. 6.

As explained above, air is drawn in via the air intake channel 725 at the end 235 of the third channel portion 230 so that there is a milk, steam and air mixture entering the mixing chamber 160. The aim of the mixing chamber is to release large bubbles and retain only small air bubbles in the mixture. The air, milk and steam mixture forms the fluid that enters the mixing chamber.

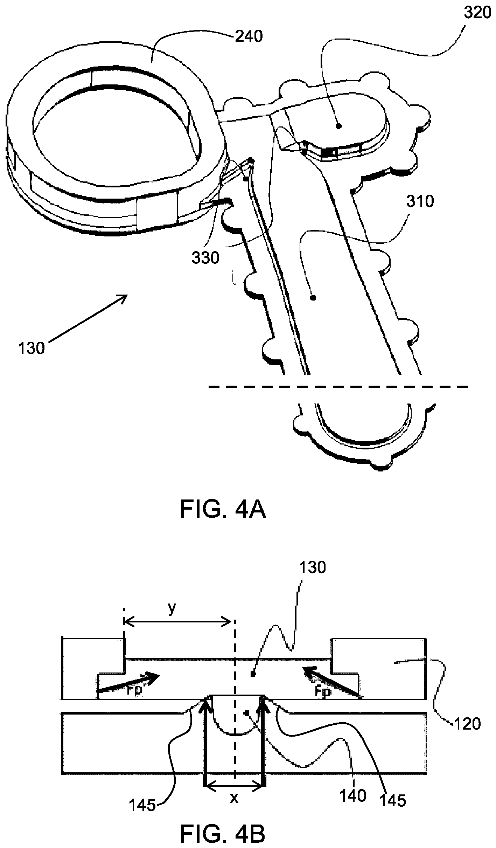

Fig. 4A shows the seal 130 of Fig. 3A in more detail.

It is clear from the description above that the various channel portions 210, 220, 230 may undergo a variety of different conditions when the mixing apparatus 100 is in operation. Therefore, the respective seal areas of these channel portions may each have their own seal requirements or specifications. The seal areas may be integrated in a single seal, for instance a span seal, as illustrated. The specifications of the respective seal areas can easily be optimized, e.g. by locally varying the thickness of the seal. By integrating the different span seal areas in a single span seal, there is no risk of leakage at the transition between the various span seal areas.

There are three parameters that may be adjusted to tune the sealing force of the span seal. The three parameters are: the shore hardness of the seal; the span width of the seal, which increases the sealing force but may also introduce some deformation to the channel; and the thickness of the seal. As the various areas of the span seal may be tuned using the span width and seal thickness, the risk of leakage is largely reduced as the need for transitions between different seals is eliminated.

For example, the seal may comprise a first sealing portion 310 for sealing the first channel portion 210 of the channel. Thus, the first sealing portion should be adapted to withstand the reduced pressure present in the first channel portion. As this pressure is typically low, for example, around 0.15 bar (15kPa) below ambient pressure, the required sealing force is low; however, the first channel portion may be relatively long, for example 200mm, meaning that the required sealing force increases. As the milk is low temperature at this stage and the dimensions of the first channel portion are not critical to the milk frothing process, the sealing force of the first sealing portion may be increased by simply increasing the span width.

As a further example, the seal may comprise a second sealing portion 320 for sealing the second channel portion 220 of the channel. In this case, the second sealing portion must withstand both the high pressure, for example 1 bar (100kPa), and the high temperature, for example 105°, of the steam entering the channel. As with the first channel portion, the geometry of the second channel portion is not critical to the milk frothing process meaning that the span width of the second sealing portion may be increased to increase the sealing force and the seal thickness may be increased to increase both the sealing force of the second sealing portion and the resistance of the second sealing portion to the high temperature of the steam.

As a final example, the seal may comprise a third sealing portion 330 for sealing the third channel portion 230 of the channel. The dimensions of the third channel portion are critical to the performance of the milk frothing process and the tolerance for deformation is low, for example ± 0.1mm. Therefore, the span width of the third sealing portion may not be freely increased and seal thickness delivers only marginal benefit to the sealing force itself. In this case, the shore hardness of the seal provides the required sealing force. The shore hardness of the seal may be constant, for example 45 shore, throughout the seal in order to prevent excessive span widths and seal thicknesses in the first and second sealing portions. In addition to the milk frothing process, the seal would be required to withstand daily cleaning, typically by way of a dishwasher. In this case, the shore hardness of the seal may help to extend the lifetime of the seal.

Finally, the seal in the illustrated embodiment has the first sealing member 240 which in assembled condition provides a radial seal around the mixing chamber 160. The three sealing portions 310, 320, 330 are span seals whereas the first sealing member 240 is a radial seal. A span seal cannot be used to seal the mixing chamber because an opening is needed for exiting the frothed milk. The three sealing portions and the first sealing member preferably together form a single integrated component.

Fig. 4B illustrates the operation of one of the span seal portions of seal 130.

The span seal works on pull forces, FP, which stretch the seal over the channel arrangement instead of compressing it. The span seal provides sealing directly onto the channel arrangement, more particular the raised channel portions 145, without a large amount of deformation of the seal being needed. The channel arrangement 140 cross sectional dimension and shape is independent of the indentation and sealing force, leading to a more stable milk froth performance, particularly in the third sealing portion 330.

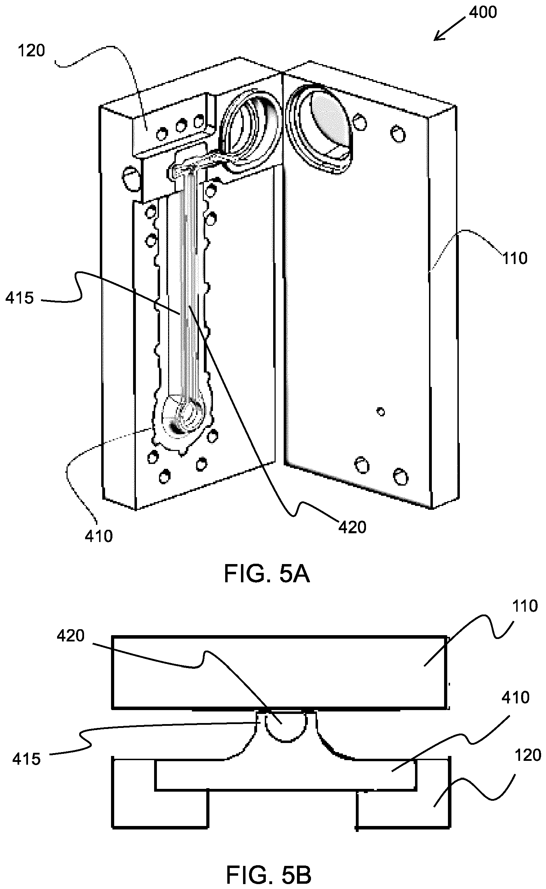

Figs. 5A and 5B show a detailed view of an alternative channel arrangement 400.

In this case, the seal 410 comprises a raised seal portion 415, which defines the channel 420 in combination with the first container 110. This arrangement simplifies the cleaning of the first container as there are fewer raised portions in which the ingredients may get stuck. In this case, the shore hardness of the seal may need to be further increased in order to ensure that the raised seal portion 415 does not deform under high pressure, thereby causing leakage to occur.

Fig. 6 shows a seal 700 having a first sealing member 240, a sealing portion 710 and a transition portion 250 there between. The top image shows a frontal view of the seal 700, arranged in the second container 120. The bottom image shows a perspective view of the opposite container 110, with mixing chamber 160, an end portion of the channel arrangement 140 and a portion of the first sealing member 240 in assembled condition, sealing around the mixing chamber 160.

As described above, the sealing member 240 may be a radial seal to surround the mixing chamber 160; The sealing portion 710 may correspond to the set of span seals 310, 320, 330 described in relation to Fig. 4A. The first sealing member 240 comprises a seal split 720, located in the transition portion 250. The seal split 720 allows milk and steam from the channel defined by the sealing portion 710 to flow into the mixing chamber 160. In this way, it is possible to integrate both the span seal 710 and the radial seal 240 into a single, integral seal, thereby increasing the simplicity of the mixing apparatus for disassembly and cleaning. However, the transition portion 250 between both seal types is known to be prone to leakage, due to the abrupt transitions (e.g. in thickness) between both seal types. The leakage risk may be further aggravated by the seal split 720. In the illustrated design, this potential disadvantage is turned into an advantage by locating the air intake at said transition portion.

As seen in the bottom image of Fig. 6, the channel arrangement 140 in this example is defined by raised channel portions 145 of the first container 110. These raised portions define the sides of the channel arrangement where span seal 710 is to be applied. A gap 725 is formed in at least one of the raised channel portions 145 adjoining the mixing chamber 160. The gap 725 is formed just upstream of the mixing chamber, adjacent the seal split 720. The gap 725 opens into the space between the first and second containers and allows external communication to the end 235 of the third channel portion 230 (as shown in Fig. 3A). The gap 725 thus forms an air intake channel via which outside air may enter the end 235 of the third channel portion 230.

The speed of the liquid (milk, steam and air) entering the mixing chamber 160 is important for the foam quality. The distance between the milk Venturi and the air gap 725, and the distance between the air gap and the mixing chamber are parameters for defining the milk frothing characteristics.

To the extent described above, the mixing apparatus is known, and indeed Figs. 2 to 6 are taken from WO 2019/129599 and WO 2019/1029515.

This invention relates to control of the frothing levels. The invention is described as a modification to the design of Figs. 1 to 6, but the underlying concept may be applied to other designs of mixing apparatus. The invention relates in particular to control of the air intake used to create the frothing, and it provides an adjustable sealing function.

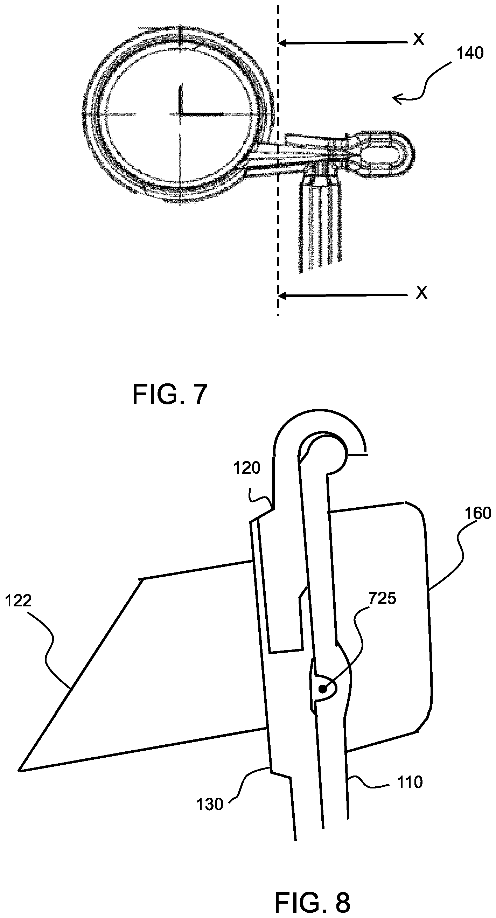

Fig. 7 shows the top part of the channel arrangement 140 and shows a cross section as X-X.

Fig. 8 shows the cross section X-X identified in Fig. 7 for the known design of Figs. 1 to 6. The first container 110 defines the mixing chamber 160 and the second container 120 defines the outlet nozzle 122. The seal 130 is formed integrally with the second container 120 and is shown extending fully across the second container.

Fig. 8 shows the end of the third channel portion 230, in particular the location at which air is drawn into the channel arrangement 140, and thus it shows a portion of the air intake channel 725.

The seal 130 forms a surface of the air intake channel 725, as shown, as well as a surface of the first and second channel portions (not shown in Fig. 8).

The invention makes use of an adjustment element for adjusting the seal 130 in the vicinity of the air intake channel 725, thereby to adjust a frothing level.

The air intake channel is for example a straight opening. As the milk and steam mixture moves fast past the opening to the air intake channel (i.e. it has a high dynamic pressure) its static pressure is below the ambient pressure as mentioned above. For this reason, air is sucked in at the end 235 of the third channel portion or frothing section 230. Thus, there is suction of milk into the central part of the frothing section 230 (just after the end of the throat at the entry to the frothing section) due to the low pressure created by the high flow velocity of the steam. At the air inlet, there is a relatively high speed flow of a milk -steam mixture, whereas at the milk inlet there is a high speed flow of steam. The speed of the steam is far higher than that of the milk-steam mixture at the air inlet. The milk suction pressure is for example of the order of 150 mbar (15kPa) below the ambient pressure. At the air inlet, the suction pressure is for example a few hundreds of Pa (below the ambient pressure).

Although in Fig. 3B the end part of the frothing section 230 leading to the end 235 is shown as a straight channel, it may have a conical shape. Within the frothing section, just downstream of the milk inlet, the frothing section has an area corresponding to the preceding throat section. The area may increase gradually proceeding downstream to the exit into the mixing chamber.

The pushing of the seal 130 into the channel arrangement 140 takes place at the larger area end 235 of the frothing section 230, near to the exit into the mixing chamber and near to the position of the air intake.

Thus, the adjustment of the seal "in the vicinity of the air intake channel" may be at a lateral position of the air intake channel or at a part of the frothing section.

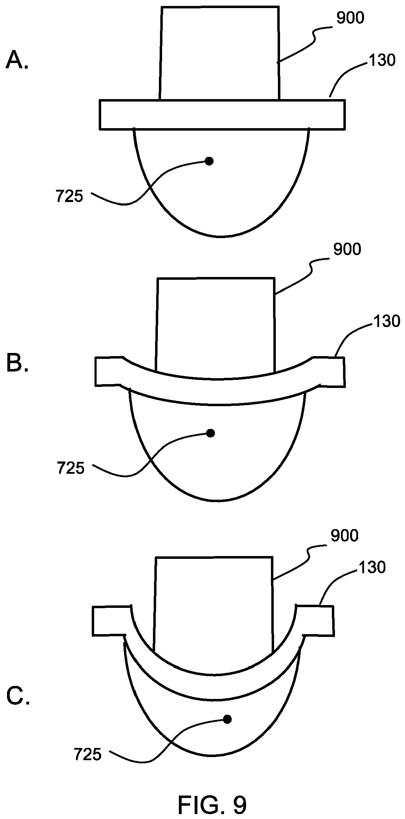

Fig. 9 shows a generic adjustment element 900 which pushes down on the seal 130 to push it into the air intake channel 725 (or into a portion of the frothing section).

Fig. 9A shows the adjustment element 900 not deforming the seal so that the maximum area of the air intake channel is allowed. Fig. 9B shows the adjustment element 900 partially pushing the seal into the air intake channel to reduce the air flow. Fig. 9C shows the adjustment element 900 further pushing the seal into the air intake channel to reduce the air flow by a maximum amount.

The illustrated three settings may comprise:
a maximum frothing setting;
an intermediate froth setting; and
a no froth setting.

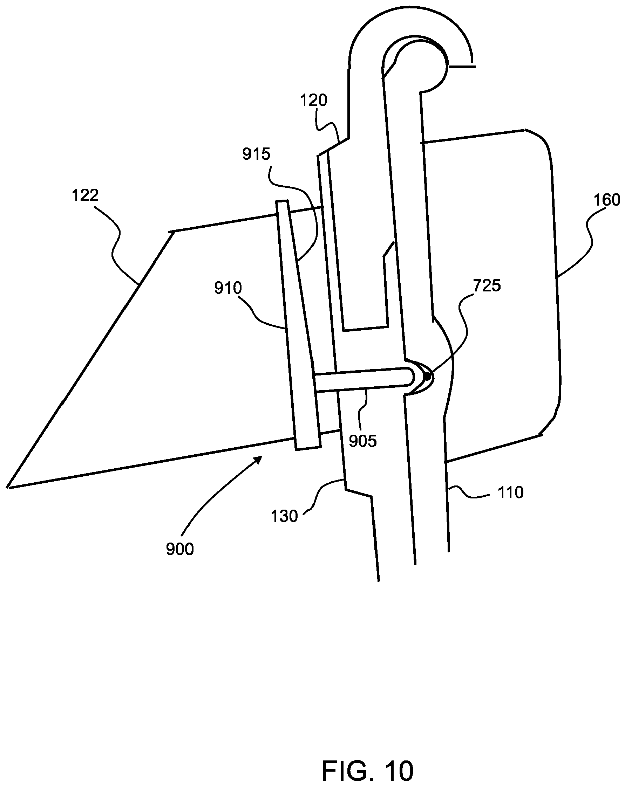

Fig. 10 shows how this approach may be applied to the mixing apparatus described above, and shows a modification to Fig. 8.

The adjustment element comprises a pusher 905 for pushing the seal 130 into the air intake channel 725. The adjustment element further comprises an adjustment ring 910 around the outlet nozzle 122, wherein the adjustment ring 910 actuates the pusher 905. The adjustment ring is rotatable to adjust the advance of the pusher 905 towards the air intake channel. This provides a simple user interface for setting the frothing level, by simply selecting the angular position of an adjustment ring around the outlet nozzle.

The adjustment ring 910 has a cam surface 915 for actuating the pusher 905. Thus, the ring simply rotates and the rotation is converted to a linear pushing by the cam surface. The pusher may be molded into the seal 130 and only moves in and out.

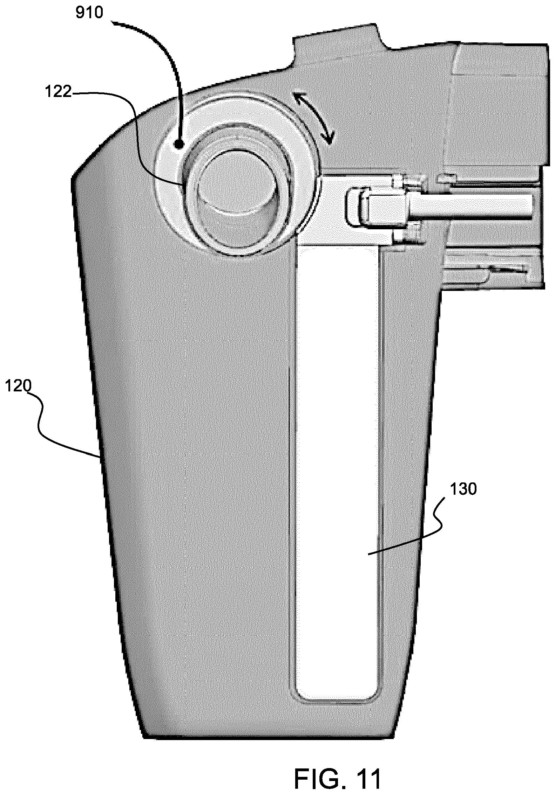

Fig. 11 shows a side view of the mixing apparatus showing the adjustment ring 910 around the outlet nozzle 122.

The froth setting may be continuously adjustable between the maximum and no froth settings by rotation of the adjustment ring, or there may be one or more discrete intermediate settings, for example as flat areas of the cam surface.

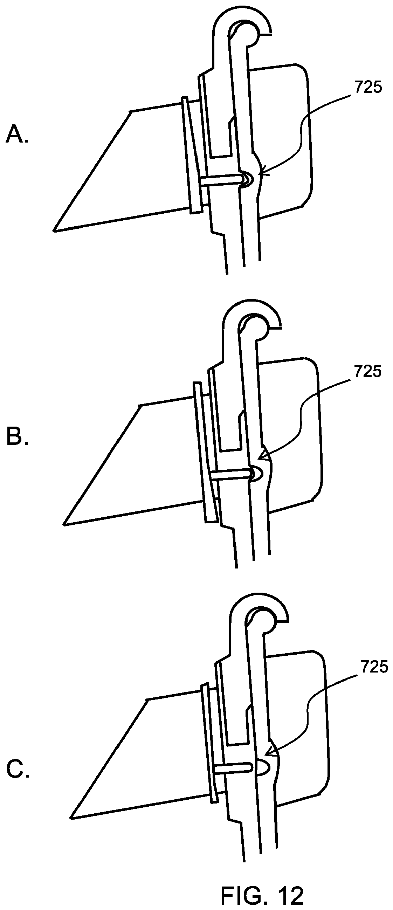

Fig. 12 shows the arrangement of Fig. 10 in three different settings; a zero froth setting (Fig. 12A), a medium froth setting (Fig. 12B) and a maximum froth setting (Fig. 12C).

The amount of seal compression or movement may only need to be from tenths of a millimeter up to about 1mm or 2mm, thereby reducing the channel area.

A setting with no froth for example enables the delivery of hot milk to be mixed with other flavors, e.g. chocolate. By pressing the seal even further into the air intake channel, the volume becomes very small.

Other variations to the disclosed embodiments can be understood and effected by those skilled in the art within the scope of protection defined by the appended claims. In the claims, the word "comprising" does not exclude other elements or steps, and the indefinite article "a" or "an" does not exclude a plurality. Any reference signs in the claims should not be construed as limiting the scope.

## Claims

1. A mixing apparatus (100) comprising:
a first port (150) for receiving milk;
a second port (170) for receiving steam;
a mixing chamber (160) for mixing milk, steam and air; and
a channel arrangement (140) between the first and second ports and the mixing chamber, wherein the channel arrangement comprises:
a first channel portion (210) connected between the first port (150) and a frothing section (230);
a second channel portion (220) connected between the second port (170) and the frothing section (230); and
an air intake channel (725) to the frothing section; and
a seal (130) forming a surface of the first and second channel portions and the air intake channel,
wherein the frothing section couples to the mixing chamber, **characterized in that** the mixing apparatus further comprises an adjustment element (900; 905, 910) for adjusting the seal in the vicinity of the air intake channel, thereby to adjust a frothing level.

2. A mixing apparatus as claimed in claim 1, comprising:
a first container (110), wherein the first container comprises the channel arrangement; and
a second container (120), wherein the second container is adapted to receive the first container,
wherein the seal (130) is disposed between the first container and the second container.

3. A mixing apparatus as claimed in claim 1 or 2, wherein the first container (110) comprises a raised channel portion (145), and wherein the channel arrangement is defined between the raised channel portion and the seal (130).

4. A mixing apparatus as claimed in any one of claims 1 to 3, wherein the adjustment element comprises a pusher (905) for pushing the seal (130) into the air intake channel (725).

5. A mixing apparatus as claimed in claim 4, comprising an outlet nozzle (122) from which frothed milk is to be dispensed from the mixing chamber, wherein the adjustment element comprises an adjustment ring (910) around the outlet nozzle, wherein the adjustment ring actuates the pusher (905), and wherein the adjustment ring is rotatable to adjust the advance of the pusher towards the air intake channel.

6. A mixing apparatus as claimed in claim 5, wherein the adjustment ring (910) comprises a cam surface (915) for actuating the pusher.

7. A mixing apparatus as claimed in any preceding claim, wherein the adjustment element (900; 905, 910) has at least three settings, comprising:
a maximum froth setting;
an intermediate froth setting; and
a no froth setting.

8. A mixing apparatus as claimed in any preceding claim, wherein the seal (130) comprises a span seal.

9. A coffee maker, the coffee maker comprising;
a liquid coffee extraction apparatus;
the mixing apparatus as claimed in any preceding claim; and
a dispenser adapted to dispense:
liquid coffee from the liquid coffee extraction apparatus; and
frothed milk from the mixing apparatus.

## Patentansprüche

1. Mischvorrichtung (100), umfassend:
eine erste Öffnung (150) zum Aufnehmen von Milch;
eine zweite Öffnung (170) zum Aufnehmen von Dampf;
eine Mischkammer (160) zum Mischen von Milch, Dampf und Luft; und
eine Kanalanordnung (140) zwischen der ersten und der zweiten Öffnung und der Mischkammer, wobei die Kanalanordnung Folgendes umfasst:
einen ersten Kanalabschnitt (210), der zwischen der ersten Öffnung (150) und einem Aufschäumbereich (230) verbunden ist;
einen zweiten Kanalabschnitt (220), der zwischen der zweiten Öffnung (170) und dem Aufschäumbereich (230) verbunden ist; und
einen Lufteinlasskanal (725) zu dem Aufschäumbereich; und
eine Dichtung (130), die eine Oberfläche des ersten und des zweiten Kanalabschnitts und des Lufteinlasskanals bildet,
wobei der Aufschäumbereich mit der Mischkammer gekoppelt ist, **dadurch gekennzeichnet, dass** die Mischvorrichtung ferner ein Einstellelement (900; 905, 910) zum Einstellen der Dichtung in der Nähe des Lufteinlasskanals umfasst, um dadurch ein Aufschäumniveau einzustellen.

2. Mischvorrichtung nach Anspruch 1, umfassend:
einen ersten Behälter (110), wobei der erste Behälter die Kanalanordnung umfasst; und
einen zweiten Behälter (120), wobei der zweite Behälter zum Aufnehmen des ersten Behälters angepasst ist, wobei die Dichtung (130) zwischen dem ersten Behälter und dem zweiten Behälter angeordnet ist.

3. Mischvorrichtung nach Anspruch 1 oder 2, wobei der erste Behälter (110) einen erhöhten Kanalabschnitt (145) umfasst und wobei die Kanalanordnung zwischen dem erhöhten Kanalabschnitt und der Dichtung (130) definiert ist.

4. Mischvorrichtung nach einem der Ansprüche 1 bis 3, wobei das Einstellelement einen Schieber (905) zum Schieben der Dichtung (130) in den Lufteinlasskanal (725) umfasst.

5. Mischvorrichtung nach Anspruch 4, umfassend eine Auslassdüse (122), aus der aufgeschäumten Milch aus der Mischkammer ausgegeben werden soll, wobei das Einstellelement einen Einstellring (910) um die Auslassdüse umfasst, wobei der Einstellring den Schieber (905) betätigt und wobei der Einstellring drehbar ist, um den Vorschub des Schiebers in Richtung des Lufteinlasskanals einzustellen.

6. Mischvorrichtung nach Anspruch 5, wobei der Einstellring (910) eine Nockenfläche (915) zum Betätigen des Schiebers umfasst.

7. Mischvorrichtung nach einem vorherigen Anspruch, wobei das Einstellelement (900; 905, 910) mindestens drei Einstellungen aufweist, umfassend:
eine maximale Schaumeinstellung;
eine mittlere Schaumeinstellung; und
eine Einstellung ohne Schaum.

8. Mischvorrichtung nach einem vorherigen Anspruch, wobei die Dichtung (130) eine Spanndichtung umfasst.

9. Kaffeemaschine, die Kaffeemaschine umfassend;
eine Flüssigkaffee-Extraktionsvorrichtung;
die Mischvorrichtung nach einem vorherigen Anspruch; und
einen Spender, der angepasst ist, um Folgendes auszugeben:
flüssigen Kaffee aus der Flüssigkaffee-Extraktionsvorrichtung; und
aufgeschäumte Milch aus der Mischvorrichtung.

## Revendications

1. Appareil de mélange (100) comprenant:
un premier orifice (150) pour la réception du lait;
un deuxième orifice (170) pour la réception de la vapeur;
une chambre de mélange (160) pour mélanger le lait, la vapeur et l'air; et
un agencement de canaux (140) entre le premier et le second port et le mélange chambre, dans laquelle l'agencement des canaux comprend:
une première partie de canal (210) connectée entre le premier port (150)
et une section de moussage (230);
une deuxième partie de canal (220) connectée entre le deuxième port (170) et la section de moussage (230);
et un canal d'admission d'air (725) vers la section de moussage; et
un joint (130) formant une surface de la première et de la deuxième partie du canal et le canal d'admission d'air, dans laquelle la section de moussage est couplée à la chambre de mélange, **caractérisée par le fait que** les l'appareil de mélange comprend en outre un élément de réglage (900; 905, 910) permettant d'ajuster la vitesse de rotation de l'appareil de mélange à proximité du canal d'admission d'air, ce qui permet de régler le niveau de moussage.

2. Appareil de mélange selon la revendication 1, comprenan:
un premier récipient (110), dans lequel le premier récipient comprend le canal l'arrangement; et
un deuxième récipient (120), dans lequel le deuxième récipient est adapté pour recevoir le premier conteneur, dans lequel le joint (130) est placé entre le premier récipient et le second contenant.

3. Appareil de mélange selon la revendication 1 ou 2, dans lequel le premier récipient (110) comprend une partie de canal surélevée (145), et dans laquelle l'agencement du canal est entre la partie surélevée du canal et le joint (130).

4. Appareil de mélange selon l'une des revendications 1 à 3, dans lequel l'élément de réglage comprend un poussoir (905) pour pousser le joint (130) dans l'admission d'air (725).

5. Appareil de mélange selon la revendication 4, comprenant une buse de sortie (122) à partir de laquelle le lait mousseux doit être distribué à partir de la chambre de mélange, dans laquelle le réglage comprend un anneau de réglage (910) autour de la buse de sortie, dans lequel l'anneau de réglage est rotatif pour ajuster la position du poussoir (905) avance du poussoir vers le canal d'admission d'air.

6. Appareil de mélange selon la revendication 5, dans lequel la bague de réglage (910) comprend une surface de came (915) pour actionner le poussoir.

7. Appareil de mélange selon l'une des revendications précédentes, dans lequel le réglage (900; 905, 910) comporte au moins trois réglages, à savoir:
un réglage maximum de la mousse;
une prise de mousse intermédiaire; et
un réglage sans mousse.

8. Appareil de mélange selon l'une quelconque des revendications précédentes, dans lequel le joint (130) comprend un joint d'étanchéité.

9. Une cafetière, la cafetière comprenant;
un appareil d'extraction de café liquide;
l'appareil de mélange selon toute revendication précédente; et
un distributeur adapté à la distribution:
du café liquide provenant de l'appareil d'extraction du café liquide; et
le lait mousseux de l'appareil de mélange.
